# EUROPÄISCHE PATENTSCHRIFT

(11) **EP 4 112 377 B1**
(45) Veröffentlichungstag und Bekanntmachung des Hinweises auf die Patenterteilung: **30.08.2023**
(21) Anmeldenummer: 21183135.9
(22) Anmeldetag: 01.07.2021
(51) Int. Cl.: B60P 3/07, B60P 3/36, B60P 1/02

(54) **KRAFTFAHRZEUG, INSBESONDERE REISEMOBIL**
MOTOR VEHICLE, IN PARTICULAR MOBILE HOME
VÉHICULE AUTOMOBILE, EN PARTICULIER CAMPING CAR

(43) Veröffentlichungstag der Anmeldung: 04.01.2023
(73) Patentinhaber: Volkner, Gerhard, 42327 Wuppertal (DE)
(72) Erfinder: Volkner, Gerhard, 42327 Wuppertal (DE)
(74) Vertreter: Andrejewski - Honke Patent- und Rechtsanwälte Partnerschaft mbB

(56) Entgegenhaltungen:
- EP-A1- 1 405 760
- EP-A1- 2 199 150
- DE-A1-102007 035 143
- DE-B4-102005 036 590
- FR-A1- 2 927 856
- GB-A- 2 103 551
- US-A- 4 822 222

## Beschreibung

Die Erfindung betrifft ein Kraftfahrzeug, insbesondere Reisemobil, mit einem eine Karosserie tragenden Fahrwerk mit zumindest zwei Achsen, und mit einer in der Karosserie angeordneten Transportaufnahme mit Aufnahmeboden, wobei der Aufnahmeboden gegenüber der Karosserie zum Zwecke des Be- und Entladens mit einem Objekt, beispielsweise einem Pkw, ein- und ausfahrbar ausgebildet ist, und wobei der mit dem Objekt beladene Aufnahmeboden nach dem Einfahren mit Hilfe einer Hebevorrichtung innerhalb der Transportaufnahme angehoben wird bzw. angehoben werden kann.

Kraftfahrzeuge und insbesondere Reisemobile sind oftmals mit einer als Pkw-Garage ausgebildeten Transportaufnahme mit Aufnahmeboden ausgerüstet. Bei einem Kraftfahrzeug und insbesondere Reisemobil des eingangs beschriebenen Aufbaus, wie es in der DE 10 2007 035 143 A1 oder auch der DE 10 2005 036 590 B4 beschrieben wird, wird so vorgegangen, dass die Transportaufnahme in Längsrichtung des Fahrzeuges zwischen einer vorderen und einer hinteren Achse angeordnet ist. Die Transportaufnahme lässt sich mit Hilfe einer an die Karosserie angepassten Seitenklappe verschließen. Der Aufnahmeboden kann bei geöffneter Seitenklappe quer zur Längsrichtung des Fahrzeuges verfahren werden. Dadurch kann beispielsweise ein Pkw auf dem Aufnahmeboden abgestellt und dann der Aufnahmeboden in die Transportaufnahme seitlich im Sinne einer Seitengarage eingefahren werden. Zum Abschluss wird der Aufnahmeboden mit Hilfe der Hebevorrichtung innerhalb der Transportaufnahme angehoben und die Seitenklappe verschlossen.

Grundsätzlich kann die Transportaufnahme aber auch anstelle in Längsrichtung des Fahrzeuges zwischen der vorderen Achse und der hinteren Achse im Heckbereich angeordnet werden, wie dies in der DE 199 28 646 A1 prinzipiell beschrieben wird. An dieser Stelle ist der Aufnahmeboden in Längsrichtung verfahrbar ausgebildet und wird der Pkw in die gleichsam als Heckgarage ausgebildete Transportaufnahme bei erneut geöffneter Seitenklappe bzw. Heckklappe in die Transportaufnahme überführt. Da der Aufnahmeboden in diesem Fall zusätzlich gegenüber einem Drehpunkt verschwenkt werden kann, ist erneut eine Hebevorrichtung realisiert und der mit dem Objekt bzw. Pkw beladene Aufnahmeboden wird nach dem Einfahren mit Hilfe der betreffenden Hebevorrichtung innerhalb der Transportaufnahme angehoben.

Mittlerweile sind auch weitere Ausführungsformen bekannt geworden, bei denen sowohl eine Seitengarage als auch eine Heckgarage realisiert ist bzw. realisiert werden kann, wie dies in der US 2011/0000730 A1 im Detail beschrieben wird.

Der Stand der Technik hat sich grundsätzlich bewährt, bietet allerdings noch Raum für Verbesserungen. So wird bisher so vorgegangen, dass der Aufnahmeboden nach dem Einfahren mit Hilfe der Hebevorrichtung innerhalb der Transportaufnahme seitens eines Benutzers beaufschlagt wird. Das heißt, der Benutzer sorgt bei geöffneter Seitenklappe oder Heckklappe im Endeffekt durch eine manuelle Beaufschlagung der Hebevorrichtung dafür, dass der mit dem Objekt beladene Aufnahmeboden innerhalb der Transportaufnahme angehoben wird. Das ist im Hinblick auf den Komfort verbesserungsfähig. Außerdem besteht bei der bekannten Vorgehensweise das grundsätzliche Problem, dass beispielsweise bei schlechten Lichtverhältnissen oder unzureichender Ausleuchtung der Transportaufnahme Kollisionen des Objektes beim anschließenden Anheben des Aufnahmebodens mit beispielsweise einer Dachfläche der Transportaufnahme nicht mit letzter Sicherheit ausgeschlossen werden können. Hier setzt die Erfindung ein.

Der Erfindung liegt das technische Problem zugrunde, ein derartiges Kraftfahrzeug und insbesondere Reisemobil so weiterzuentwickeln, dass die Gefahr etwaiger Kollisionen des Objektes mit der Transportaufnahme ausgeschlossen wird.

Zur Lösung dieser technischen Problemstellung ist ein gattungsgemäßes Kraftfahrzeug und insbesondere Reisemobil im Rahmen der Erfindung dadurch gekennzeichnet, dass die Transportaufnahme mit wenigstens einem Sensor ausgerüstet ist, welcher die Hebevorrichtung in Abhängigkeit von mit dem Sensor ermittelten Abmessungen des Objektes ansteuert.

Nach vorteilhafter Ausgestaltung wird zu diesem Zweck so vorgegangen, dass der Sensor und die Hebevorrichtung an eine gemeinsame Steuereinheit angeschlossen sind. Der Sensor selbst kann dabei typischerweise taktil arbeiten. In der Regel ist der Sensor jedoch berührungslos ausgebildet und tastet das Objekt berührungslos ab. Grundsätzlich sind auch Mischformen denkbar. Außerdem hat es sich bewährt, wenn der Sensor an der Dachfläche der Transportaufnahme angeordnet ist. Das ist selbstverständlich nicht zwingend.

Hierdurch besteht die Möglichkeit, dass der Sensor wenigstens einen Abstand des Objekthöchsten zu der Dachfläche der Transportaufnahme erfasst. Das Objekthöchste bezeichnet dabei den Punkt oder Bereich des Objektes, welcher den größten Abstand von dem das Objekt tragenden Aufnahmeboden aufweist. Der Sensor arbeitet nun berührungslos und kann bei in die Transportaufnahme eingefahrenem Aufnahmeboden mit darauf befindlichem Objekt durch seine Anordnung an der Dachfläche der Transportaufnahme den Abstand des Objekthöchsten zu der Dachfläche der Transportaufnahme erfassen und an die Steuereinheit übermitteln. Das erfolgt typischerweise in Grundstellung der Hebevorrichtung, also unmittelbar dann, wenn der Aufnahmeboden in die Transportaufnahme eingefahren ist und die Hebevorrichtung noch nicht für ein Anheben des Aufnahmebodens innerhalb der Transportaufnahme gesorgt hat.

Denn aus den auf diese Weise gewonnenen Werten des Abstandes des Objekteshöchsten zu der Dachfläche der Transportaufnahme kann mit Hilfe der Steuereinheit ermittelt und festgelegt werden, wie weit die Hebevorrichtung den Aufnahmeboden innerhalb der Transportaufnahme anheben kann. Dabei wird ganz generell so gearbeitet, dass der Abgleich der Abstände derart erfolgt, dass die Steuereinheit die Hebevorrichtung so ansteuert, dass das Objekthöchste gegebenenfalls unter Berücksichtigung eines Sicherheitsabstandes nicht mit der Dachfläche der Transportaufnahme kollidiert.

In der Regel wird mit Hilfe des typischerweise berührungslos arbeitenden Sensors jedoch nicht der Abstand des Objekthöchsten zu der Dachfläche der Transportaufnahme erfasst. Vielmehr sorgt der Sensor dafür, dass die Oberfläche des Objektes in zumindest einer Schnittebene erfasst wird. Infolge der Schnittebene können jeweilige Abstände der auf diese Weise gewonnenen Schnittebenenpunkte zur Dachfläche der Transportaufnahme ermittelt werden. Handelt es sich bei dem Sensor beispielsweise um einen optischen Sensor, so korrespondiert die Schnittebene meistens zu einem Lichtvorhang. Neben einer solchen gleichsam zweidimensionalen Vermessung der Oberfläche des Objektes in der zumindest einen Schnittebene wird erfindungsgemäß und besonders vorteilhaft die Oberfläche des Objektes dreidimensional vermessen, und zwar wiederum berührungslos. Dadurch können auch etwaige asymmetrische Gestaltungen der Oberfläche des Objektes erfasst und abgebildet werden. In einem solchen Fall werden üblicherweise Abstände von Oberflächenpunkten des Objektes zur Dachfläche der Transportaufnahme erfasst.

Die Dachfläche der Transportaufnahme ist in der Regel und nicht notwendigerweise eben gestaltet. Vielmehr kann die Dachfläche der Transportaufnahme zerklüftet mit gegebenenfalls dort vorgesehenen Stau- und/oder Vorratsräumen ausgebildet sein. In diesem Fall sind in der Steuereinheit im Allgemeinen Abstände zumindest einzelner ausgesuchter Dachflächenpunkte der Transportaufnahme zum Aufnahmeboden hinterlegt. Im günstigsten Fall ist die Dachfläche mit den dort vorgesehenen sämtlichen Stau- und/oder Vorratsräumen als Netz aus Dachflächenpunkten ausgebildet, wobei die Abstände der einzelnen Dachflächenpunkte der Transportaufnahme zum Aufnahmeboden in diesem Fall in der Steuereinheit hinterlegt sind oder hinterlegt werden können. Daneben besteht alternativ oder zusätzlich die Möglichkeit, mit Hilfe eines der Hebevorrichtung zugeordneten weiteren Sensors die Abstände zumindest einzelner ausgesuchter Oberflächenpunkte der Transportaufnahme zum Aufnahmeboden zu messen. Eine solche Abstandsmessung ist auch beim Betrieb der Hebevorrichtung möglich.

In der Steuereinheit werden nun im Allgemeinen die Abstände der sämtlichen oder einzelner ausgewählter Dachflächenpunkte zum Aufnahmeboden mit dem Abstand des Objekthöchsten zur Dachfläche bzw. den jeweiligen Abständen der Schnittebenenpunkte zur Dachfläche abgeglichen. Sofern die Oberfläche des Objektes dreidimensional abgetastet wird, erfolgt in der Steuereinheit ein Abgleich der Abstände der Dachflächenpunkte zum Aufnahmeboden mit den jeweiligen Abständen der Oberflächenpunkte oder ausgewählter Oberflächenpunkte des Objektes zur besagten Dachfläche.

Der Abgleich der Abstände kann dabei derart erfolgen, dass die Steuereinheit die Hebevorrichtung - wie bereits erläutert - so ansteuert, dass das Objekt höchste respektive einzelne Schnittebenenpunkte bzw. Oberflächenpunkte des Objektes gegebenenfalls unter Berücksichtigung eines Sicherheitsabstandes nicht mit der Dachfläche der Transportaufnahme kollidieren. Dadurch stellt die Erfindung sicher, dass eine etwaige Kollision des auf dem Aufnahmeboden platzierten Objektes bzw. seiner Oberfläche mit der Dachfläche der Transportaufnahme in jedem Fall vermieden wird. Das gilt selbst dann, wenn sich beispielsweise die Oberfläche und damit die Oberflächenpunkte des Objektes verändern.

Denkbar ist es in diesem Zusammenhang beispielsweise, dass als Objekt ein offener Pkw auf dem Aufnahmeboden platziert wird. Ein solches Cabrio verfügt über eine unterschiedliche Ausdehnung und damit Beabstandung seiner Oberfläche und der zugehörigen Oberflächenpunkte zur Dachfläche im Vergleich zum geschlossenen Zustand. Da die Messung des Objekthöchsten respektive der einzelnen Schnittebenenpunkte bzw. Oberflächenpunkte des Objektes praktisch bei jedem neuen Beladevorgang erneut durchgeführt wird, ist sichergestellt, dass Kollisionen der Oberfläche des Objektes sowohl in geschlossenem als auch offenem Zustand sicher vermieden werden. Hinzu kommt, dass in diesem Zusammenhang auf etwaige taktil arbeitete Sensoren, die an Grenzen stoßen bei beispielsweise offenen Pkws, typischerweise nicht zurückgegriffen wird. Sondern der Sensor arbeitet berührungslos, und nimmt nach vorteilhafter Ausgestaltung eine dreidimensionale Abtastung der Oberfläche des Objektes vor und erfasst die jeweiligen Abstände der Oberflächenpunkte des Objektes zur Dachfläche der Transportaufnahme.

Um dies im Detail zu realisieren und umzusetzen, kann der jeweilige Sensor auf Basis von Ultraschall arbeiten. Alternativ oder zusätzlich ist aber auch die Realisierung eines Sensors auf Basis von Radarmessungen (Radio Amplification Detektion and Ranging) unter Rückgriff auf Radiowellen möglich. In der Regel arbeitet der Sensor jedoch optisch. Hier hat sich der Rückgriff auf einen Laser und/oder Kamerabilder als besonders günstig erwiesen. Generell kann der jeweilige Sensor aber auch auf Basis von kapazitiven und/oder induktiven Messungen arbeiten, wobei die zuvor erwähnten Meßprinzipien grundsätzlich auch miteinander kombiniert werden können.

Der Sensor ist in der Regel zentral an der Dachfläche der Transportaufnahme angeordnet. Um dennoch für eine zweidimensionale und vorteilhaft dreidimensionale Abtastung der Oberfläche des Objektes sorgen zu können, ist der Sensor in der Regel mit einer Ablenkeinheit ausgerüstet. Sofern es sich bei dem Sensor um einen Laser handelt, kommt als Ablenkeinheit ein sogenannter 3D-Laserscanner vorteilhaft zum Einsatz. Hierbei handelt es sich typischerweise um einen Spiegel, der in zwei Richtungen ausgelenkt werden kann. Generell kommen als Ablenkeinheit bei einem solchen 3D-Laserscanner jedoch zwei orthogonal zueinander drehbare Spiegel zum Einsatz, über die der Lichtstrahl ausgehend vom Laser auf die Oberfläche des Objektes abgelenkt wird. Die beiden Spiegel werden zu diesem Zweck mit einem separaten Antrieb, einem Galvanometerantrieb, verfahren, der mit Hilfe der Steuereinheit beaufschlagt wird. Dadurch kann mit Hilfe der Ablenkeinheit bzw. der beiden orthogonal drehbar und nah beieinander aufgestellten stehenden Spiegel die gesamte Oberfläche des Objektes abgetastet werden.

Dabei wird der Abstand jedes auf diese Weise abgefahrenen Oberflächenpunktes des Objektes zur Dachfläche vermessen. Das heißt, der Sensor nimmt an dieser Stelle eine Abstandsmessung vor, die nach dem Impuls- und/oder Phasenmessverfahren durchgeführt werden kann.

Sofern der Sensor eine Abstandsmessung vornimmt, wird meistens nach dem Impulslaufzeitverfahren gearbeitet. Das heißt, ausgehend von dem Laser wird ein Laserpuls bzw. eine Abfolge von Laserpulsen ausgesandt, auf einen Punkt bzw. Oberflächenpunkt des Objektes gerichtet und von diesem Oberflächenpunkt wieder reflektiert. Der reflektierte Laser wird dabei mit Hilfe eines photosensitiven Sensors, beispielsweise einer CCD-Kamera, räumlich erfasst und die Impulslaufzeit wird gemessen. Dadurch kann auf den Abstand des Oberflächenpunktes zum Laser und damit den Abstand des Oberflächenpunktes von der Dachfläche der Transportaufnahme rückgeschlossen werden.

Alternativ oder zusätzlich kann aber auch nach dem sogenannten Phasenmessverfahren vorgegangen werden. In diesem Fall wird ein kontinuierlicher Laserstrahl ausgesandt. Der Laserstrahl wird erneut von der Ablenkeinheit auf den Oberflächenpunkt des Objektes gerichtet, an dieser Stelle reflektiert und vom Detektor erfasst. Außerdem wird die Amplitude des kontinuierlichen Laserstrahls mit mehreren sinusförmigen Wellen unterschiedlicher Wellenlänge moduliert. Der entstehende zeitliche Abstand des empfangenen Signals gegenüber dem gesendeten Signal stellt dabei ein Maß für die Entfernung des Lasers zum Objekt dar. Bei gleichzeitiger Betrachtung der Phasenlage des gesendeten und des empfangenen Signals mit Hilfe des Sensors ergibt sich eine Phasendifferenz, die die Bestimmung des Objektabstandes zum Laser erlaubt und damit die gewünschten Rückschlüsse bezüglich des betreffenden Oberflächenpunktes des Objektes hinsichtlich seines Abstandes zur Dachfläche der Transportaufnahme zulässt.

Die Transportaufnahme selbst ist in der Regel mit Hilfe einer an die Karosserie angepassten Seitenklappe verschließbar. Die Seitenklappe wird dabei nach Maßgabe der Steuereinheit motorisch beaufschlagt. Hierbei wird so vorgegangen, dass die Seitenklappe geöffnet ist, solange sich das Objekt auf dem Aufnahmeboden befindet und der Aufnahmeboden in die Transportaufnahme eingefahren wird. Auch noch während der Beaufschlagung des Aufnahmebodens mit Hilfe der Hebevorrichtung ist in der Regel die Seitenklappe geöffnet, kann allerdings während dieses Hebevorganges bereits verschlossen werden. Das stellt die Steuereinheit sicher, die nicht nur für die Ansteuerung des Aufnahmebodens und der Hebevorrichtung in Abhängigkeit von den ausgelesenen Sensorsignalen sorgt, sondern auch die Beaufschlagung des motorischen Antriebes für die Seitenklappe bewerkstelligt.

Der beschriebene Vorgang kann dabei automatisch vorgenommen werden. Es ist aber auch möglich, dass ein Bediener mit einer Fernbedieneinheit den Aufnahmeboden und die Hebevorrichtung beaufschlagt. Durch den einen oder die mehreren Sensoren wird der Bediener zuverlässig vor etwaigen Kollisionen des Objektes mit der Dachfläche der Transportaufnahme gewarnt bzw. werden solche Kollisionen verhindert, weil die Hebevorrichtung zuvor abgebremst wird.

Von besonderer Bedeutung für die Erfindung ist darüber hinaus der Umstand, dass das Reisemobil mit einem Heckmotor ausgerüstet ist. Dadurch wird ein besonders komfortabler Betrieb gewährleistet. In Verbindung mit der in diesem Zusammenhang zwischen den beiden Achsen vorgesehenen Transportaufnahme wird die Möglichkeit geschaffen, den Aufnahmeboden zur Längsseite des Reisemobils hin be- und entladen zu können. Bei der Transportaufnahme handelt sich in diesem Fall um einen Aufnahmekäfig, der mit dem quer zur Längsachse des Reisemobils verfahrbaren Aufnahmeboden ausgerüstet ist.

Der Aufnahmeboden selbst stützt sich dabei in der Regel mit Hilfe von Hydraulikzylindern an der Karosserie des Reisemobils bzw. an Horizontalträgern des Aufnahmekäfigs ab. Außerdem weist die Karosserie des Reisemobils im Allgemeinen durch Querträger verbundene Längsträger auf, die sich im Wesentlichen über die gesamte Reisemobillänge erstrecken. Dadurch kann oberhalb der Längsträger ein Innenboden des Reisemobils angeordnet werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: das erfindungsgemäße Kraftfahrzeug bzw. Reisemobil in einer ersten Ausführungsvariante,
- Fig. 2: die Transportaufnahme mit Aufnahmeboden und Hebevorrichtung im schematischen Schnitt und
- Fig. 3: eine abgewandelte Ausführungsform des erfindungsgemäßen Kraftfahrzeuges in Gestalt des Reisemobils.

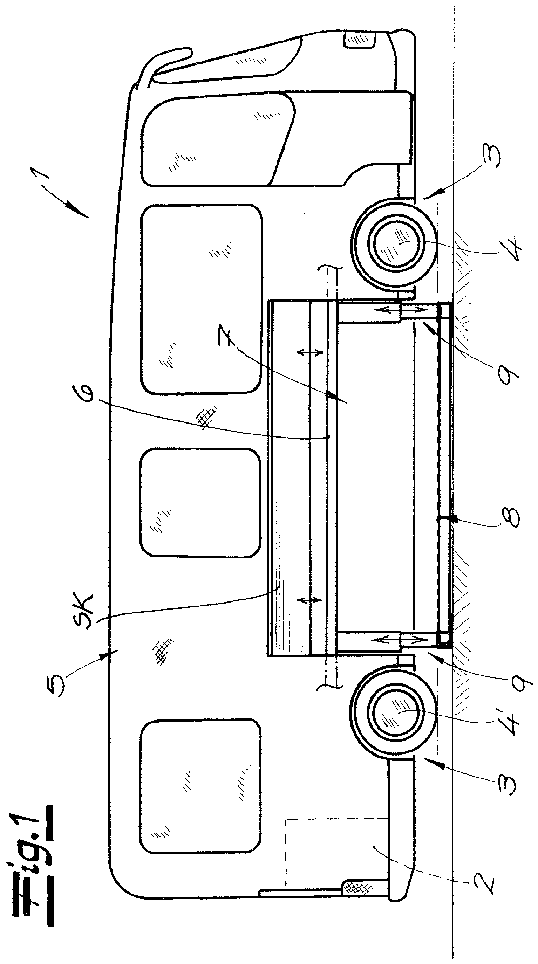

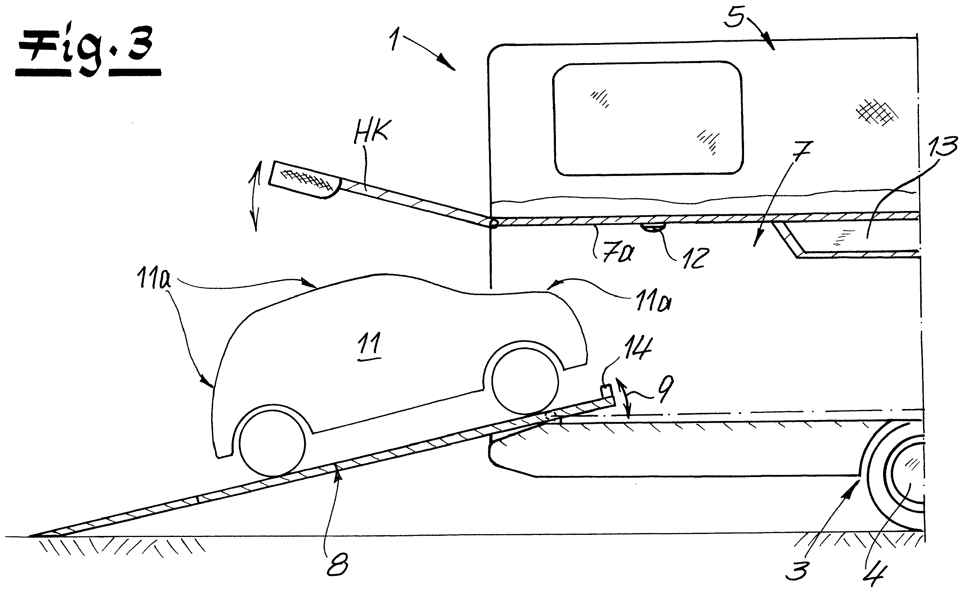

In den Figuren ist ein Kraftfahrzeug dargestellt, bei dem es sich um ein Reisemobil handelt, wie es in den Fig. 1 und 3 in unterschiedlicher Ausprägung wiedergegeben ist. Das Reisemobil verfügt zu diesem Zweck über eine Karosserie 1, die von einem Fahrwerk 3 getragen wird. Außerdem erkennt man beim Ausführungsbeispiel nach der Fig. 1 noch einen Heckantrieb bzw. Heckmotor 2. Das Reisemobil ist mit mindestens zwei Achsen 4, 4', sowie einer Fahrzeugzelle 5 ausgerüstet. Außerdem erkennt man noch einen auf dem Fahrwerk 3 abgestützten Rahmen 6, der sich aus zwei in der Regel über die gesamte Fahrzeuglänge erstreckenden Längsprofilen und zugehörigen die Längsprofile verbindenden Querstreben in Gestalt eines Gitters zusammensetzt.

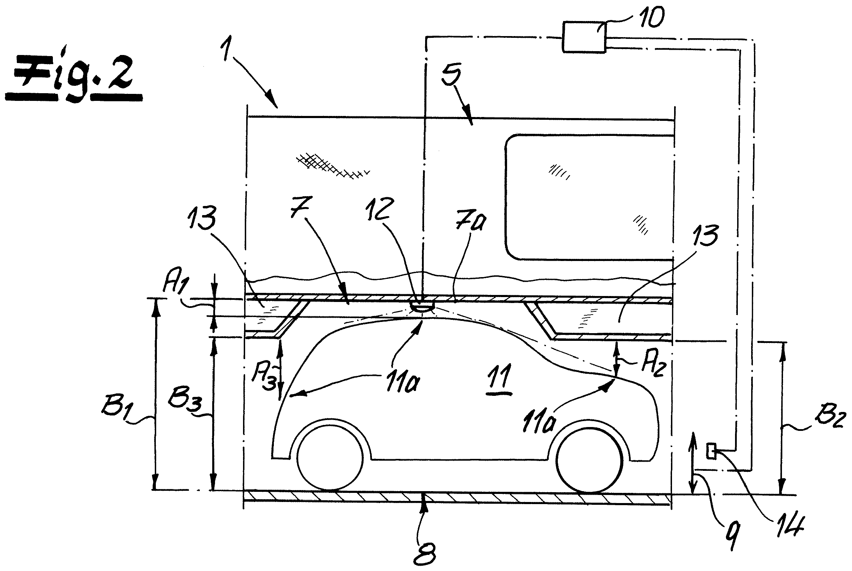

Von besonderer Bedeutung ist nun eine Transportaufnahme 7, die bei dem Ausführungsbeispiel nach der Fig. 1 in Längsrichtung des Fahrzeugs zwischen der vorderen Achse 4 und einer hinteren Achse 4' angeordnet ist. Bei der Variante nach der Fig. 3 ist die Transportaufnahme 7 im Heckbereich vorgesehen. Die Transportaufnahme 7 ist dabei jeweils in der Karosserie 1 angeordnet und lässt sich beim Ausführungsbeispiel nach der Fig. 1 zu einer oder beiden Längsseiten des Fahrzeuges und bei der Variante nach der Fig. 3 zum Heckbereich hin öffnen. In beiden Fällen ist die Transportaufnahme 7 mit einem Aufnahmeboden 8 sowie einer Hebevorrichtung 9 für den Aufnahmeboden 8 ausgerüstet. Anhand der schematischen Darstellung in der Fig. 2 erkennt man, dass die Hebevorrichtung 9 darüber hinaus an eine Steuereinheit 10 angeschlossen ist und mit ihrer Hilfe beaufschlagt wird.

Beim Ausführungsbeispiel nach der Fig. 1 kann die Transportaufnahme 7 längsseitig des Fahrzeuges geöffnet werden und ist über eine Trägerkonstruktion bzw. einem Aufnahmekäfig mit dem Rahmen 6 der Fahrzeugzelle 5 verbunden. Der Aufnahmeboden 8 der Transportaufnahme 7 bei diesem Ausführungsbeispiel ist zum Zwecke des Be- und Entladens an beiden Längsseiten des Fahrzeugs 1 ausfahrbar. Generell kann der Aufnahmeboden 8 aber auch nur an einer der beiden Längsseiten des Fahrzeuges ausgefahren werden, und zwar jeweils quer zur Längsrichtung des Fahrzeugs. Außerdem ist eine Seitenklappe SK vorgesehen, mit deren Hilfe die Transportaufnahme 7 nach dem Ladevorgang verschlossen werden kann.

Beim alternativen Ausführungsbeispiel nach der Fig. 3 ist anstelle der Seitenklappe SK eine Heckklappe HK realisiert, mit deren Hilfe in diesem Fall die Transportaufnahme 7 im Heckbereich verschlossen wird, sobald der Aufnahmeboden 8 in die Transportaufnahme 7 eingefahren worden ist. In beiden Fällen dient der Aufnahmeboden 8 zur Aufnahme eines Objektes 11, bei dem es sich im Ausführungsbeispiel um einen Pkw 11 handelt. Tatsächlich kann das Objekt bzw. der Pkw 11 in die betreffende Transportaufnahme 7 jeweils ein- und ausgefahren werden. Hierzu ist der Aufnahmeboden 8 beim Ausführungsbeispiel nach der Fig. 1 quer zur Längsrichtung des Fahrzeuges ein- und ausfahrbar ausgestaltet, wohingegen bei der Variante nach der Fig. 3 der Aufnahmeboden 8 in Längsrichtung ein- und ausfahrbar ausgebildet ist.

Nach dem Einfahren des Aufnahmebodens 8 mit dem darauf befindlichen Objekt 11 wird der mit dem Objekt 11 beladene Aufnahmeboden 8 mit Hilfe der Hebevorrichtung 9 innerhalb der Transportaufnahme 7 angehoben. Hierbei kommt es darauf an, dass das Objekt 11 bzw. eine Oberfläche 11a des Objektes 11 nicht mit einer Dachfläche 7a der Transportaufnahme 7 kollidiert. Um dies zu gewährleisten, ist erfindungsgemäß die Transportaufnahme 7 mit wenigstens einem Sensor 12 ausgerüstet, den man am besten anhand der Schemadarstellung in der Fig. 2 nachvollziehen kann. Der Sensor 12 sorgt nun nach dem Ausführungsbeispiel in Verbindung mit der Steuereinheit 10 dafür, dass die Hebevorrichtung 9 in Abhängigkeit von mit dem Sensor 12 ermittelten Abmessungen des Objektes 11 angesteuert wird. Dazu sind der Sensor 12 und die Hebevorrichtung 9 - wie beschrieben -, an die gemeinsame Steuereinheit 10 angeschlossen.

Der Sensor 12 kann generell taktil arbeiten. Nach dem Ausführungsbeispiel arbeitet der Sensor 12 jedoch berührungslos und vorteilhaft optisch, wie einzelne vom Sensor 12 ausgehende Strahlen in der Darstellung nach der Fig. 2 deutlich machen. Tatsächlich kann mit Hilfe des Sensors 12 nach dem Ausführungsbeispiel die Oberfläche 11a des Objektes 11 dreidimensional berührungslos und optisch abgetastet werden. Dazu handelt es sich bei dem Sensor 12 nach dem Ausführungsbeispiel und nicht einschränkend um einen 3D-Laserscanner, das heißt einen Sensor 12, der neben einem Laser oder einer Laserdiode zusätzlich eine Ablenkeinheit und einen Detektor für die vom Objekt 11 reflektierten Strahlen aufweist, wie dies in der Einleitung bereits beschrieben worden ist. Außerdem arbeitet der Sensor 12 nach dem Impuls-Messverfahren, das heißt, es werden an dieser Stelle kurze Laserimpulse ausgesandt, am Objekt 11 reflektiert und ihre Laufzeit bis zum Auftreffen auf den Detektor gemessen.

Als Folge hiervon kann mit Hilfe des Sensors 12 der jeweilige Abstand A_{1,} A₂, A₃ von Oberflächenpunkten an der Oberfläche 11a des Objektes 11 zur Dachfläche 7a ermittelt werden. Das gilt auch für den Fall, dass die Dachfläche 7a zerklüftet ausgebildet ist und im Bereich der Dachfläche 7a zusätzlich dort vorgesehene Stau- und/oder Vorratsräume 13 vorgesehen sind.

Außerdem sind in der Steuereinheit 10 zumindest einzelne ausgesuchte Abstände B1, B2, B3 einzelner Dachflächenpunkte der Transportaufnahme 7 im Vergleich zum Aufnahmeboden 8 hinterlegt. Hierbei handelt es sich um durch die Konstruktion vorgegebene Werte. Die betreffenden Abstände B₁, B₂ und B₃ im Beispielfall der einzelnen Dachflächenpunkte der Transportaufnahme 7 zum Aufnahmeboden 8 korrespondieren dabei zur abgesenkten Position des Aufnahmebodens 8, also zu der Stellung, in welcher die Hebevorrichtung 9 noch nicht beaufschlagt worden ist.

Die Abstände B₁, B₂, B₃ können beim Verfahren der Hebevorrichtung 9 mit dem Verfahrweg der Hebevorrichtung 9 verknüpft werden. Alternativ oder zusätzlich ist im Ausführungsbeispiel ein weiterer Sensor 14 vorgesehen, und zwar an der Hebevorrichtung 9. Mit Hilfe des Sensors 14 werden Abstandsmessungen eines Festpunktes der Hebevorrichtung 9 zum demgegenüber verfahrbaren Aufnahmeboden 8 vorgenommen. Diese Abstandsmessungen werden von der Steuereinheit 10 in entsprechende Abstände B₁, B₂, B₃ des Aufnahmebodens 8 der einzelnen Dachflächenpunkte der Transportaufnahme 7 zum Aufnahmeboden 8 umgerechnet.

In der Steuereinheit 10 können nun die Abstände B₁, B₂, B₃ der Dachflächenpunkte zum Aufnahmeboden 8 mit den jeweiligen Abständen A_{1,} A₂, A₃ der Oberflächenpunkte des Objektes 11 zur Dachfläche 7a der Transportaufnahme 7 abgeglichen werden. Der Abgleich erfolgt dabei dergestalt, dass die Steuereinheit 10 im Anschluss hieran die Hebevorrichtung 9 so ansteuert, dass ein Objekthöchstes bzw. die einzelnen Oberflächenpunkte des Objektes 11 respektive ganz generell die Oberfläche 11a des Objektes 11 nicht mit der Dachfläche 7a der Transportaufnahme 7 kollidiert. Dabei kann zusätzlich auch ein in der Fig. 2 angedeuteter Sicherheitsabstand eingehalten werden, welcher mit dem Abstand A₁ im Beispielfall zusammenfällt. Nachdem der Aufnahmeboden 8 mit Hilfe der Hebevorrichtung 9 nach Maßgabe der vom Sensor 12 ermittelten Abmessungen des Objektes 11 mit Hilfe der Steuereinheit 10 soweit angehoben worden ist, dass das Objekt 11 nicht mit der Dachfläche 7a der Transportaufnahme 7 kollidiert, sorgt anschließend die Steuereinheit 10 dafür, dass bei der Variante nach der Fig. 1 die Seitenklappe SK geschlossen wird bzw. beim Ausführungsbeispiel nach der Fig. 3 die Heckklappe HK eine Schließung erfährt.

Der beschriebene Vorgang zum Einfahren des Aufnahmebodens 8 in die Transportaufnahme 7 sowie das anschließende Anheben des Aufnahmebodens 8 mit Hilfe der Hebevorrichtung 9 kann aufgrund der vorhandenen Sensoren 12, 14 in Verbindung mit der Steuereinheit 10 vollautomatisch erfolgen. Es ist auch ein halbautomatischer Betrieb möglich. In diesem Fall nimmt ein Bediener die Ansteuerung des Aufnahmebodens 8 ebenso wie der Hebevorrichtung 9 mit Hilfe einer Fernbedieneinheit vor. Gleichwohl werden Kollisionen vermieden, weil die Steuereinheit 10 die Hebevorrichtung 9 zuvor abbremst.

## Patentansprüche

1. Kraftfahrzeug, insbesondere Reisemobil, mit einem eine Karosserie (1) tragenden Fahrwerk (3) mit zumindest zwei Achsen (4, 4'), und mit einer in der Karosserie (1) angeordneten Transportaufnahme (7) mit Aufnahmeboden (8), wobei der Aufnahmeboden (8) gegenüber der Karosserie (1) zum Zwecke des Be- und Entladens mit einem Objekt (11), beispielsweise einem Pkw (11), ein- und ausfahrbar ausgebildet ist, und wobei der mit dem Objekt (11) beladene Aufnahmeboden (8) nach dem Einfahren mit Hilfe einer Hebevorrichtung (9) innerhalb der Transportaufnahme (7) angehoben wird,
**dadurch gekennzeichnet, dass**
die Transportaufnahme (7) mit wenigstens einem Sensor (12) ausgerüstet ist, welcher die Hebevorrichtung (9) in Abhängigkeit von mit dem Sensor (12) ermittelten Abmessungen des Objektes (11) ansteuert.

2. Kraftfahrzeug nach Anspruch 1, **dadurch gekennzeichnet, dass** der Sensor (12) und die Hebevorrichtung (9) an eine gemeinsame Steuereinheit (10) angeschlossen sind.

3. Kraftfahrzeug nach Anspruch 1 oder 2, **dadurch gekennzeichnet, dass** der Sensor (12) taktil und/oder berührungslos arbeitet.

4. Kraftfahrzeug nach einem der Ansprüche 1 bis 3, **dadurch gekennzeichnet, dass** der Sensor (12) an einer Dachfläche (7a) der Transportaufnahme (7) angeordnet ist.

5. Kraftfahrzeug nach einem der Ansprüche 1 bis 4, **dadurch gekennzeichnet, dass** der Sensor (12) wenigstens einen Abstand des Objekthöchsten zu der Dachfläche (7a) der Transportaufnahme (7) erfasst.

6. Kraftfahrzeug nach einem der Ansprüche 1 bis 5, **dadurch gekennzeichnet, dass** der Sensor (12) die Oberfläche des Objektes (11) in zumindest einer Schnittebene und den jeweiligen Abstand der Schnittebenenpunkte zur Dachfläche (7a) der Transportaufnahme (7), vorzugsweise die jeweiligen Abstände (A_{1,} A₂, A₃) von Oberflächenpunkten des Objektes (11) zur Dachfläche (7a) der Transportaufnahme (7), erfasst.

7. Kraftfahrzeug nach einem der Ansprüche 1 bis 6, **dadurch gekennzeichnet, dass** die Dachfläche (7a) der Transportaufnahme (7) zerklüftet mit gegebenenfalls dort vorgesehenen Stau- und/oder Vorratsräumen (13) ausgebildet ist.

8. Kraftfahrzeug nach einem der Ansprüche 1 bis 7, **dadurch gekennzeichnet, dass** in der Steuereinheit (10) Abstände (B₁, B₂, B₃) zumindest einzelner ausgesuchter Dachflächenpunkte der Transportaufnahme (7) zum Aufnahmeboden (8) hinterlegt sind und/oder mit Hilfe eines der Hebevorrichtung (9) zugeordneten weiteren Sensors (14) erfasst werden.

9. Kraftfahrzeug nach Anspruch 8, **dadurch gekennzeichnet, dass** in der Steuereinheit (10) die Abstände (B₁, B₂ B₃) der Dachflächenpunkte zum Aufnahmeboden (8) mit den jeweiligen Abständen (A_{1,} A₂, A₃) der Oberflächenpunkte des Objektes zur Dachfläche (7a) abgeglichen werden.

10. Kraftfahrzeug nach Anspruch 9, **dadurch gekennzeichnet, dass** der Abgleich der Abstände (B₁, B₂, B₃; A_{1,} A₂, A₃) derart erfolgt, dass die Steuereinheit (10) die Hebevorrichtung (9) so ansteuert, dass die einzelnen Oberflächenpunkte des Objektes (11), gegebenenfalls unter Berücksichtigung eines Sicherheitsabstandes (A₁), nicht mit der Dachfläche (7a) der Transportaufnahme (7) kollidieren.

11. Kraftfahrzeug nach einem der Ansprüche 1 bis 10, **dadurch gekennzeichnet, dass** der Sensor (12, 14) auf der Basis von Ultraschall und/oder Radar und/oder Laser und/oder von Kamerabildern und/oder kapazitiven und/oder induktiven Messungen arbeitet.

12. Kraftfahrzeug nach einem der Ansprüche 1 bis 11, **dadurch gekennzeichnet, dass** der Sensor (12, 14) mit einer Ablenkeinheit ausgerüstet ist.

13. Kraftfahrzeug nach Anspruch 11 oder 12, **dadurch gekennzeichnet, dass** der Sensor (12, 14) als 3D-Laserscanner ausgebildet ist.

14. Kraftfahrzeug nach einem der Ansprüche 1 bis 13, **dadurch gekennzeichnet, dass** der Sensor (12, 14) die Abstandsmessung nach dem Impuls- und/oder Phasenmessverfahren vornimmt.

15. Kraftfahrzeug nach einem der Ansprüche 1 bis 14, **dadurch gekennzeichnet, dass** die Transportaufnahme (7) mit Hilfe einer an die Karosserie (1) angepassten Seitenklappe (SK) verschließbar ist, die nach Maßgabe der Steuereinheit (10) motorisch beaufschlagt wird.

## Claims

1. Motor vehicle, in particular motorhome, having a chassis (3) supporting a body (1) with at least two axles (4, 4'), and having a transport receptable (7) arranged in the body (1) with a receiving floor (8), wherein the receiving floor (8) is designed to be retractable and extendable relative to the body (1) for the purpose of loading and unloading with an object (11), for example a passenger car (11), and wherein the receiving floor (8) loaded with the object (11) is lifted by means of a lifting device (9) within the transport receptable (7) after retraction,
**characterized in that**
the transport receptacle (7) is equipped with at least one sensor (12), which controls the lifting device (9) as a function of dimensions of the object (11) determined with the sensor (12).

2. Motor vehicle according to Claim 1, **characterized in that** the sensor (12) and the lifting device (9) are connected to one and the same control unit (10).

3. Motor vehicle according to Claim 1 or 2, **characterized in that** the sensor (12) functions in a tactile manner and/or without contact.

4. Motor vehicle according to one of Claims 1 to 3, **characterized in that** the sensor (12) is arranged on a roof area (7a) of the transport receptacle (7).

5. Motor vehicle according to one of Claims 1 to 4, **characterized in that** the sensor (12) detects at least a distance of the object highest to the roof area (7a) of the transport receptacle (7).

6. Motor vehicle according to one of Claims 1 to 5, **characterized in that** the sensor (12) detects the surface of the object (11) in at least one section plane and the respective distance between the section plane points and the roof area (7a) of the transport receptacle (7), preferably the respective distances (A_{1,} A₂, A₃) between surface points of the object (11) and the roof area (7a) of the transport receptacle (7) .

7. Motor vehicle according to one of Claims 1 to 6, **characterized in that** the roof area (7a) of the transport receptacle (7) is jagged, with any stowage and/or storage spaces (13) provided there.

8. Motor vehicle according to one of Claims 1 to 7, **characterized in that** distances (B₁, B₂, B₃) between at least individual selected roof area points of the transport receptacle (7) and the receiving floor (8) are stored in the control unit (10) and/or are detected by means of a further sensor (14) associated with the lifting device (9).

9. Motor vehicle according to Claim 8, **characterized in that** the distances (B₁, B₂, B₃) between the roof area points and the receiving floor (8) are compared to the respective distances (A₁, A₂, A₃) between the surface points of the object and the roof area (7a) in the control unit (10).

10. Motor vehicle according to Claim 9, **characterized in that** the distances (B₁, B₂, B₃; A₁, A₂, A₃) are compared in such a manner that the control unit (10) controls the lifting device (9) such that the individual surface points of the object (11) do not collide with the roof area (7a) of the transport receptacle (7), possibly taking a safety distance (A₁) into account.

11. Motor vehicle according to one of Claims 1 to 10, **characterized in that** the sensor (12, 14) works on the basis of ultrasound and/or radar and/or laser and/or camera images and/or capacitive and/or inductive measurements.

12. Motor vehicle according to one of Claims 1 to 11, **characterized in that** the sensor (12, 14) is equipped with a deflection unit.

13. Motor vehicle according to Claim 11 or 12, **characterized in that** the sensor (12, 14) is designed as a 3D laser scanner.

14. Motor vehicle according to one of Claims 1 to 13, **characterized in that** the sensor (12, 14) carries out the distance measurement according to the pulse and/or phase measurement method.

15. Motor vehicle according to one of Claims 1 to 14, **characterized in that** the transport receptacle (7) can be closed by means of a side flap (SK), which is adapted to the body (1) and is motor-actuated in accordance with the control unit (10).

## Revendications

1. Véhicule, en particulier autocaravane, avec un châssis (3) supportant une carrosserie (1), avec au moins deux essieux (4, 4') et avec un compartiment de transport (7) disposé dans la carrosserie (1) avec fond de compartiment (8), sachant que le fond de compartiment (8) est constitué pouvant être rentré et sorti par rapport à la carrosserie (1) dans le but de charger et décharger un objet (11), par exemple un véhicule de tourisme (11), et sachant que le fond de compartiment (8) chargé de l'objet (11) est relevé après l'introduction à l'aide d'un dispositif de levage (9) à l'intérieur du compartiment de transport (7),
**caractérisé en ce que**
le compartiment de transport (7) est équipé au moins d'un capteur (12), lequel actionne le dispositif de levage (9) en fonction des dimensions de l'objet (11) déterminées avec le capteur (12).

2. Véhicule selon la revendication 1, **caractérisé en ce que** le capteur (12) et le dispositif de levage (9) sont raccordés à une unité de commande commune (10).

3. Véhicule selon la revendication 1 ou 2, **caractérisé en ce que** le capteur (12) fonctionne de façon tactile et/ou sans contact.

4. Véhicule selon l'une quelconque des revendications 1 à 3, **caractérisé en ce que** le capteur (12) est disposé sur une surface de toit (7a) du compartiment de transport (7).

5. Véhicule selon l'une quelconque des revendications 1 à 4, **caractérisé en ce que** le capteur (12) saisit au moins une distance allant du point le plus haut de l'objet à la surface de toit (7a) du compartiment de transport (7) .

6. Véhicule selon l'une quelconque des revendications 1 à 5, **caractérisé en ce que** le capteur (12) saisit la surface de l'objet (11) dans au moins un plan de coupe et la distance respective des points de plan de coupe par rapport à la surface de toit (7a) du compartiment de transport (7), de préférence les distances respectives (A₁, A₂, A₃) des points de surface de l'objet (11) à la surface de toit (7a) du compartiment de transport (7).

7. Véhicule selon l'une quelconque des revendications 4 à 6, **caractérisé en ce que** la surface de toit (7a) du compartiment de transport (7) est constituée fractionnée avec le cas échéant des espaces de rangement et/ou de réserves (13) qui y sont prévus.

8. Véhicule selon l'une quelconque des revendications 1 à 7, **caractérisé en ce que** des distances (B₁, B₂, B₃) au moins des points de surfaces de toit individuels recherchés du compartiment de transport (7) par rapport au fond de compartiment (8) sont mémorisés dans l'unité de commande (10) et/ou sont saisis à l'aide d'un autre capteur (14) attribué au dispositif de levage (9).

9. Véhicule selon la revendication 8, **caractérisé en ce que** les distances (B₁, B₂, B₃) des points de surface de toit au fond de compartiment (8) sont ajustées dans l'unité de commande (10) avec les distances respectives (A₁, A₂, A₃) des points de surface de l'objet par rapport à la surface de toit (7a).

10. Véhicule selon la revendication 9, **caractérisé en ce que** l'ajustage des distances (B₁, B₂, B₃; A₁, A₂, A₃) a lieu de telle manière que l'unité de commande (10) actionne le dispositif de levage (9) de sorte que les points de surface individuels de l'objet (11) ne coïncident pas avec la surface de toit (7a) du compartiment de transport (7), le cas échéant en prenant en considération une distance de sécurité (A₁).

11. Véhicule selon l'une quelconque des revendications 1 à 10, **caractérisé en ce que** le capteur (12, 14) fonctionne à base d'ultrasons et/ou de radar et/ou de laser et/ou d'images de caméra et/ou de mesures capacitives et/ou inductives.

12. Véhicule selon l'une quelconque des revendications 1 à 11, **caractérisé en ce que** le capteur (12, 14) est équipé d'une unité de déviation.

13. Véhicule selon la revendication 11 ou 12, **caractérisé en ce que** le capteur (12, 14) est constitué sous la forme d'un laser à balayage tridimensionnel.

14. Véhicule selon l'une quelconque des revendications 11 à 13, **caractérisé en ce que** le capteur (12, 14) procède à la mesure de distance selon le procédé de mesure par impulsions et/ou par phases.

15. Véhicule selon l'une quelconque des revendications 1 à 14, **caractérisé en ce que** le compartiment de transport (7) peut être fermé à l'aide d'un volet latéral (SK) adapté à la carrosserie (1), qui est sollicité de façon motorisée selon l'unité de commande (10).
